# EUROPÄISCHE PATENTSCHRIFT

(11) **EP 2 492 565 B1**
(45) Veröffentlichungstag und Bekanntmachung des Hinweises auf die Patenterteilung: **17.07.2013**
(21) Anmeldenummer: 11001454.5
(22) Anmeldetag: 22.02.2011
(51) Int. Cl.: F16L 5/02, H02G 3/22

(54) **Leitungsdurchführung mit Schichtenfolge**
Circuit lead through with a sequence of layers
Passage de ligne avec empilement

(43) Veröffentlichungstag der Anmeldung: 29.08.2012
(73) Patentinhaber: Hauff-Technik GmbH & Co. KG, 89542 Herbrechtingen (DE)
(72) Erfinder: Heck, Martin, 89447 Zöschingen (DE)
(74) Vertreter: Szynka, Dirk

(56) Entgegenhaltungen:
- EP-A1- 1 843 071
- EP-A1- 2 131 085
- WO-A1-97/02636

## Beschreibung

Die vorliegende Erfindung betrifft eine Leitungsdurchführung mit einem Elastomerkörper zum Aufbauen eines dichtenden Verschlusses einer von einer Leitung durchsetzten Öffnung in einer Wand.

Bei aus dem Stand der Technik bekannten Leitungsdurchführungen wird ein Elastomerkörper mit einer Spannvorrichtung verformt und legt sich dabei dichtend sowohl an die Leitung als auch an etwa die Laibung einer Kernbohrung, einen in eine Wandöffnung eingesetzten Rahmen oder eine Innenwand eines in die Wand einbetonierten oder anderweitig darin befestigten Rohres an. Die Spannvorrichtung kann den Elastomerkörper dabei in Leitungsrichtung oder auch quer dazu verformen, was die vorliegende Erfindung jedoch ebenso wenig einschränken soll wie die spezifische Ausgestaltung einer Befestigung und des dichtenden Übergangs zur Wand hin. Vielmehr ist vorliegend der Elastomerkörper von Interesse.

In der Praxis sind nicht nur verschiedene Leitungstypen, sondern vor allem auch unterschiedliche Leitungsquerschnitte abzudichten. Da sich trotz der Verformung des Elastomerkörpers beim Verspannen nicht beliebig große Distanzen überbrücken lassen, jedenfalls nicht mit einer dann noch zufriedenstellenden Dichtwirkung, muss eine die Leitung aufnehmende Durchgangsöffnung des Elastomerkörpers an den Leitungsquerschnitt angepasst sein.

Damit ein Monteur auf der Baustelle dann nicht eine Vielzahl unterschiedliche Leitungsdurchführungen vorhalten muss, sind aus dem Stand der Technik, beispielsweise aus der EP 1 843 071 A1, Elastomerkörper mit einer in der Durchgangsöffnung vorgesehenen Folge mehrerer über Materialbrücken zusammenhängender Schichten bekannt, die dann in Abhängigkeit von dem Durchmesser einer hindurchzuführenden Leitung abgetrennt und aus der Durchgangsöffnung genommen werden können. Dabei erweist sich insbesondere die Herstellung eines solchen Elastomerkörpers mit Schichtenfolge als aufwendig, weil dazu üblicherweise in einem Elastomervollkörper mit einem diesen in Leitungsrichtung nicht vollständig durchsetzenden Schneidewerkzeug in sich geschlossene Schnittlinien gezogen werden müssen, und zwar der Anzahl der Schichten entsprechend viele.

Deshalb zeigen die jüngsten Entwicklungen gemäß der EP 2 131 085 A1 aus in einer die Mittenachse der Leitung beinhaltenden Schnittebene kammartig aufgebauten Elastomerkörpereinzelteilen zusammengesetzte Elastomerkörper, die in diesem Bild dann also zwei mit den Kammzinken ineinander geschobenen Kämmen entsprechen. Die Schichten der Elastomerkörperteile sind dabei anders ausgedrückt so verzahnt, dass sie wie zwei Zahnräder ineinander greifen, zwischen zwei Schichten eines Elastomerkörperteils also immer eine Schicht des anderen Elastomerkörperteils und somit auch ein entsprechender Zwischenraum vorliegt. Die Schichten müssen dann nicht durch aufwändige Schneidevorgänge erzeugt werden, weil die Elastomerkörperteile mit hinreichend großen Zwischenräumen auch in einer entsprechenden Form erzeugt werden können, etwa durch Spritzguss.

Der vorliegenden Erfindung liegt die Aufgabe zugrunde, eine vorteilhafte Ausgestaltung einer Leitungsdurchführung mit einem in seinen Abmessungen quer zur Leitungsrichtung anpassbaren Elastomerkörper anzugeben.

Erfindungsgemäß wird diese Aufgabe mit einer Leitungsdurchführung mit einem Elastomerkörper aus mehreren für sich einstückigen Teilen gelöst, die dazu ausgelegt sind, im zusammengebauten Zustand eine Folge mehrerer hinsichtlich einer den Abstand zur Mittenachse der Leitung bestimmenden Richtung (Abstandsrichtung) benachbarter Schalen zu ergeben. Die Leitung ist dann in jeder Schicht dieser Folge von den Schalen vollständig umgeben, es umschließt also je Schicht entweder eine Schale allein die Leitung oder grenzt zu diesem Zweck in Umlaufrichtung an mindestens eine weitere Schale. Dabei ist an einem Elastomerkörperteil eine Mehrzahl in Abstandsrichtung aufeinander folgende Schalen vorgesehen und liegt zwischen zwei in Abstandsrichtung nächstbenachbarten Schalen dieses Elastomerkörperteils ein Zwischenraum vor, in welchem erfindungsgemäß eine Mehrzahl in Abstandsrichtung nächstbenachbarter Schalen von zumindest einem anderen Elastomerkörperteil angeordnet ist.

Um bei dem Bild des Kamms zu bleiben: Zwischen den nächst benachbarten Zinken eines kammartig aufgebauten Elastomerkörperteils ist also nicht nur ein Zinken eines anderen Elastomerkörperteils angeordnet, sondern mindestens zwei. Dadurch ist vorteilhafterweise einerseits mit dem Elastomerkörper eine feinstufige Anpassung an Leitungsquerschnitte möglich und kann der kammartig aufgebaute Elastomerkörperteil andererseits noch immer in einer entsprechenden Form hergestellt werden, etwa durch ein Spritzgießen, Gießen oder Pressen von Kunststoffmaterial.

Die Erfinder haben nämlich festgestellt, dass sich mit einem Elastomerkörper mit zwei ineinandergreifenden Kämmen gemäß dem Stand der Technik nicht beliebig kleine Schalendicken realisieren lassen. Es muss ja mit der Schalendicke im selben Maße auch die komplementäre Zwischenraumweite verringert werden, sodass etwa für die Herstellung eines Elastomerkörpers mit 0,5 mm dicken Schalen eben auch Zwischenräume dieser Weite vorzusehen sind, also in einem entsprechenden Formwerkzeug dann die Dicke der zu den Zwischenräumen negativen Zwischenwände ebenfalls nur noch 0,5 mm beträgt. Gleichzeitig messen die Schalen und damit die Zwischenwände in Leitungsrichtung jedoch üblicherweise einige Zentimeter und wirken bei einigen kunststoffformenden Verfahren, wie etwa dem Spritzgießen, hohe Drücke auf das Formwerkzeug, weswegen die Erfinder eine Verformung der Zwischenwände befürchten. Solche dünnen Zwischenwände sind auch generell empfindlicher, also auch in Kombination mit drucklosen Verfahren, weil es etwa auch beim Entformen zu einer Verformung kommen kann. Dies gilt umso mehr, wenn die Zwischenwände zum Zwecke eines vereinfachten Entformens zu ihren freien Enden hin verjüngt gestaltet sind, weil dann die Zwischenwandstärke weiter abnimmt, etwa in dem zuvor genannten Beispiel auch nur noch 0,3 mm betragen kann.

Indem nun erfindungsgemäß in dem Zwischenraum eines kammartig aufgebauten Elastomerkörperteils eine Mehrzahl in Abstandsrichtung benachbarte Schalen vorgesehen werden, können auch der Zwischenraum und dementsprechend die Zwischenwand in einem Formwerkzeug entsprechend weiter bzw. stärker gefasst werden; im Ergebnis können vorteilhafterweise auch dünne Schalen in einem Formwerkzeug hergestellt werden.

Eine Schale ist im Kontext dieser Erfindung ein Körper, dessen Ausdehnung in Abstandsrichtung wesentlich kleiner ist als in Leitungs- und Umlaufrichtung. Da sich die Erfindung nicht auf Leitungen und Wandöffnungen mit einem kreisförmigen Querschnitt beschränkt, folgt eine Schale nicht notwendigerweise einer (zylindrisch) gekrümmten Fläche, sondern kann beispielsweise im Falle eines rechteckförmigen Querschnitts auch plan ausgebildet sein. Eine Schicht kann dann aus einer Schale aufgebaut sein, die gegebenenfalls auch durch einen sich quer zur Leitung erstreckenden Schnitt durchtrennt sein kann, oder aus mehreren, also mindestens zwei, in Umlaufrichtung aneinandergrenzenden Schalen. Im Falle einer Leitung mit einem kreisförmigen Querschnitt können die Schalen dann Rotationskörper oder, wenn mehrere Schalen gemeinsam eine Schicht bilden, Segmente davon sein und eine gemeinsame in Leitungsrichtung ausgerichtete Rotationsachse haben.

Die Leitung ist von der Schale bzw. den Schalen einer Schicht vollständig umgeben, was jedenfalls in Bezug auf die Leitungsrichtung bereichsweise für einen verpressten Elastomerkörper und nicht zwingend für einen nur lose zusammengesetzten gilt; hier können nämlich durchaus noch Zwischenräume vorliegen, die etwa den Zusammenbau des Elastomerkörpers, also das Zusammenschieben der Schalen, erleichtern.

In der gesamten Offenbarung wird nicht im Einzelnen zwischen der Beschreibung einer Leitungsdurchführung, eines Satzes bzw. Systems von Leitungsdurchführungen, Verfahren zu deren Herstellung und dem Verwendungsaspekt der Erfindung unterschieden; die gesamte Offenbarung ist implizit im Hinblick auf sämtliche Kategorien zu verstehen. Insbesondere bezüglich der den Zusammenbau betreffenden Verfahrensmerkmale wird aus Gründen der Anschaulichkeit auch auf die Ausführungsbeispiele verwiesen.

Rein vorsorglich wird ferner festgehalten, dass eine Leitung betreffende Angaben, etwa zu einer Richtung der Leitung oder einem Abstand zu dieser, nicht bedeuten, dass die Leitung auch tatsächlich durch den Elastomerkörper geführt sein muss, sondern die Geometrie bzw. Eigenschaften beschreiben, als ob eine Leitung hindurchgeführt und der Elastomerkörper gegebenenfalls auch verpresst wäre.

Eine erfindungsgemäße Schichtenfolge kann sowohl zur Anpassung an unterschiedliche Leitungsquerschnitte als auch mit Blick auf unterschiedliche Wandöffnungen für eine Anpassung des Elastomerkörperaußenumfangs vorgesehen sein. Gleichwohl wird im Folgenden der Übersichtlichkeit halber vorrangig die Anpassung an Leitungsquerschnitte aufgegriffen.

Die genannten Vorteile ― ein in einer Form herstellbares Elastomerkörperteil einerseits und eine Verringerung der Schalendicke andererseits ― lassen sich beispielsweise auch schon mit nur einem (im Schnitt) kammartig aufgebauten Elastomerkörperteil erzielen, in dessen Zwischenraum oder -räumen etwa zwei konventionell hergestellte, durch einen in Umlaufrichtung verlaufenden Schnitt voneinander getrennte Schalen eines anderen Elastomerkörperteils greifen. Auf diese Weise können nämlich mit nur einem Schnitt unter Einbeziehung des komplementären Gegenstücks bis zu vier dünne Schalen zur Verfügung gestellt werden, sind also ebenfalls weniger aufwändige Schneidevorgänge notwendig.

Bevorzugt ist allerdings, dass die In dem Zwischenraum in Abstandsrichtung nächstbenachbarten Schalen, also die in Abstandsrichtung direkt aufeinander folgenden Schalen, jeweils zu anderen Elastomerkörperteilen gehören; dies muss nicht notwendigerweise auch für in Umlaufrichtung aufeinander folgende Schalen gelten. Sofern dann alle in Abstandsrichtung jeweils nächst benachbarten Schalen der Folge jeweils zu unterschiedlichen Elastomerkörperteilen gehören, kann beispielsweise auch vollständig auf in Umlaufrichtung verlaufende Schnitte verzichtet werden, was eine besonders zeit- und kostenoptimierte Herstellung der Elastomerkörperteile ermöglicht.

Es kann also beispielsweise ein (im Schnitt) kammartig aufgebautes Elastomerkörperteil in einer Form mit den Zwischenräumen entsprechenden Trennwänden aus einem Kunststoffmaterial gespritzt, gegossen oder gepresst werden und können dann jeweils lose, ebenfalls in einem solchen Verfahren hergestellte Schalen, beispielsweise geschlossene Ringe, in den Zwischenraum gesetzt werden.

Vorzugsweise gehören jedoch alle Schalen in der Schalenfolge jeweils in einer Mehrzahl zu jeweils einem einzigen Elastomerkörperteil, liegen also keine einzelnen losen Schalen vor, was sowohl die Handhabung der Elastomerkörperteile beim Zusammensetzen des Elastomerkörpers als auch dessen Handhabung durch einen Installateur vereinfacht, weil die Zahl der Einzelteile reduziert wird.

Insbesondere bei Ausführungsformen mit jeweils in einer Mehrzahl an einem Elastomerkörper vorgesehenen Schalen, jedoch nicht nur bei solchen, kann ein Elastomerkörperteil auch mit einem Funktionszusatz versehen werden, also beispielsweise mit Festkörperpartikeln zur EMV-Abschirmung. Röntgenabsorption oder zur Verbesserung der Brandschutzeigenschaften.

In weiterer Ausgestaltung sind in unterschiedlichen Zwischenräumen des Elastomerkörperteils angeordnete Schalen über eine in Leitungsrichtung endseitig an den Schalen vorgesehene, sich nicht über deren gesamte Stirnseite erstreckende Materialbrücke (im Folgenden kurz "Brücke") zu einem Elastomerkörperteil verbunden, also einstückig ausgebildet. In Leitungsrichtung gesehen sind bei einem solchen Elastomerkörperteil trotz der die Schalen verbindenden Brücken bereichsweise die Zwischenräume zwischen den Schalen sichtbar. Auch in Abhängigkeit von der genauen Anordnung der Brücke können beim Zusammenbau eines erfindungsgemäßen Elastomerkörpers die Schalen anderer Elastomerkörperteile dann an dieser bereichsweise nicht verdeckten Stirnseite "eingefädelt" und in Leitungsrichtung an einer entsprechend schmal gefassten Brücke vorbei in die Zwischenräume geschoben werden.

Die Brücke kann bei diesem Vorbeischieben ein Stück weit elastisch ausweichen bzw. kann die vorbeizuschiebende Schale gegenüber einer nächst benachbarten Schale in Bezug auf die Umlaufrichtung auch ein Stück "kürzer" ausgebildet sein und zusammen mit einer komplementären "längeren" Schale und/oder auch erst nach dem Verpressen des Elastomerkörpers die Leitung vollständig umschließen.

Vorzugsweise ist in Bezug auf die Abstandsrichtung je Zwischenraum nur genau eine Schale über dieselbe Brücke mit Schalen der anderen Zwischenräume verbunden; weiter bevorzugt sind sämtliche Schalen über jeweilige Brücken verbunden, liegen also keine losen Schalen vor.

Dabei ist eine im selben Herstellungsverfahren mit den Schalen ausgebildete, also direkt an diese angeformte oder mit diesen geformte. Brücke bevorzugt. Es ist dann in dem Formwerkzeug ein der Brücke entsprechender Hohlraum vorgesehen, der vorteilhafterweise, weil er ja sämtliche Schalen des Elastomerkörperteils verbindet, gleichzeitig als das Kunststoffmaterial auf die Schalen bzw. die entsprechenden Kavitäten verteilender Kanal dienen kann, beispielsweise bei einem Spritzgussverfahren als Anspritzkanal.

In weiterer Ausgestaltung ist dann zumindest ein Abschnitt der Brücke in Bezug auf die Stirnseiten der durch sie verbundenen Schalen in Leitungsrichtung zurückspringend zwischen den Schalen angeordnet, ist die Brücke also nicht auf die Stirnseiten "aufgesetzt". An einer Stirnseite einer nächstbenachbarten Schale ist dann eine zu diesem Abschnitt der Brücke komplementäre Ausnehmung vorgesehen, in welcher dieser dann angeordnet ist Sofern die Brücke beispielsweise ausschließlich zwischen den Schalen vorgesehen ist, liegt sie dann innerhalb des zusammengebauten Elastomerkörpervolumens, grenzt also allenfalls bündig an die Stirnseiten des Elastomerkörpers.

Unabhängig davon, ob die Brücke auf die Stirnseiten der durch sie verbundenen Schalen gesetzt oder zumindest teilweise zwischen den Schalen angeordnet ist, kann sie beim Zusammenbau des Elastomerkörpers vorteilhafterweise als Anschlag dienen, wenn die an zwei unterschiedlichen Elastomerkörperteilen vorgesehenen Schalen in Leitungsrichtung ineinander geschoben werden.

In weiterer Ausgestaltung ist dann an einer Stirnseite der Brücke eine Markierung vorgesehen, vorzugsweise eine Einkerbung. Eine solche Markierung kann beispielsweise bestimmte Positionen in Abstandsrichtung, also etwa bestimmte Durchmesser, kennzeichnen bzw. auch eine bevorzugte Trennlinie für ein Durchtrennen der Brücke vorgeben.

Generell können die Brücken als ohne Werkzeug abreißbar ausgelegt sein oder auch so gestaltet werden, dass zum Durchtrennen ein Schneidewerkzeug erforderlich ist.

Bei einer bevorzugten Ausführungsform grenzen in jeder Schicht der Folge jeweils mindestens zwei Schalen in mindestens zwei Grenzflächen pro Schicht anelnander, wobei jeweils zwei dieser Grenzflächen einer jeden Schicht gemeinsam mit jeweils zwei Grenzflächen der anderen Schichten eine die Leitung durchlaufende Trennfläche ergeben, welche die Schichtenfolge und vorzugsweise den gesamten Elastomerkörper durchteilt. Die Trennfläche ergibt sich somit aus den einzelnen, gemeinsam ein Aufklappen der Schichtenfolge ermöglichenden Grenzflächen; diese liegen jedoch nicht notwendigerweise in einer Ebene, sodass sich die Trennfläche etwa im Falle in Umlaufrichtung zueinander versetzter Grenzflächen auch gemeinsam mit die Grenzflächen verbindenden Grenzflächenabschnitten, in denen nächstbenachbarte Schichten mit ihren Mantelflächen aneinander grenzen, ergeben kann.

Sofern für den Elastomerkörper genau eine solche Trennfläche vorgesehen ist, teilt ihn diese vorzugsweise in zwei (nicht zwingend symmetrische) Hälften. Bei der Montage einer entsprechenden Durchführung kann dann aus jeder Hälfte entsprechend dem Querschnitt der hindurchzuführenden Leitung eine bestimmte Anzahl an Schalen entfernt werden, jeweils von der Trennfläche her beginnend, und können dann die beiden Hälften auf die Leitung gesetzt werden, sodass die verbleibenden Schalen dann gemeinsam die Leitung umschließen.

Insbesondere diese Ausführungsform eignet sich auch für eine Abdichtung größerer Wandöffnungen, in die eine Mehrzahl Leitungsdurchführungen gemeinsam gesetzt werden; die folgenden Erläuterungen gelten jedoch auch unabhängig davon ganz allgemein für eine Mehrzahl erfindungsgemäße Durchführungen.

Die einzelnen Leitungsdurchführungen weisen dabei eine solche Querschnittsfläche senkrecht zur Leitungsrichtung im Verhältnis zu der Querschnittsfläche der Wandöffnung auf, dass sie gemeinsam oder auch gemeinsam mit mindestens einer Spannvorrichtung zum Dichten eingesetzt werden können. Die Elastomerkörper können im erstgenannten Fall dann etwa in Leitungsrichtung verspannt werden, beispielsweise mit jeweils einer eigenen Spannvorrichtung. Im Falle einer zusammen mit den Elastomerkörpern in die Wandöffnung gesetzten Spannvorrichtung können die Elastomerkörper beispielsweise quer zur Leitungsrichtung verpresst werden, wobei typischerweise eine Spannvorrichtung für mindestens zwei Elastomerkörper vorgesehen ist.

Dabei können beispielsweise auch mehr erfindungsgemäße Elastomerkörper als tatsächlich hindurch geführte Leitungen vorliegen und die nicht von einer Leitung durchsetzten Elastomerkörper durch einen im Zentrum der Schalenfolge sitzenden, gegebenenfalls auch einstückig mit einem Schalen aufweisenden Elastomerkörperteil ausgebildeten Blindstopfen verschlossen sein. Ein solcher ist allerdings nicht nur im Kontext großer Wandöffnungen denkbar, sondern kann auch bei anderen Ausgestaltungen der Erfindung vorgesehen sein.

Im Falle einer den Elastomerkörper vollständig durchteilenden Trennfläche verläuft vorzugsweise eine die Schalen des Elastomerkörpers zusammenhaltende Brücke quer zur Leitungsrichtung über die gesamte Breite der durch sie verbundenen Schalen und grenzt dabei an die Trennfläche, sodass die Schalen von der Brücke jeweils an einer Ecke gehalten sind. Dadurch werden die Schalen stabilisiert, was das Ineinanderschieben der Elastomerkörperteile erleichtert (siehe Figuren). Die Schalen werden durch die Brücke jedenfalls gegen ein Verdrehen in Umlaufrichtung und gegebenenfalls auch gegen ein Auffächern quer zur Leitungsrichtung stabilisiert.

Das Vorliegen einer Trennfläche schließt weitere Trennflächen prinzipiell nicht aus, sodass der Elastomerkörper beispielsweise auch durch zwei Trennflächen in vier Elastomerkörperstücke unterteilt sein kann. Dennoch wird der Einfachheit halber vorrangig auf Elastomerkörperhälften Bezug genommen; diese brauchen ferner auch nicht gleich groß zu sein.

In weiterer Ausgestaltung ist dann an einem anderen als dem die erste Brücke aufweisenden Elastomerkörperteil ebenfalls eine Brücke vorgesehen, die an die erste Brücke grenzt. Vorzugsweise verläuft die zweite Brücke dabei durch dazu komplementäre Ausnehmungen in den Stirnseiten der Schalen des ersten Elastomerkörper teils. Bei dieser Ausführungsform können zwar nicht alle Schalen direkt an den Ecken, jedoch zumindest so nahe an den Ecken wie möglich gehalten werden (eben nur den Abmessungen der anderen Brücke(n) entsprechend davon entfernt).

In weiterer Ausgestaltung ist an mindestens zwei Elastomerkörperteilen mit jeweils einer Mehrzahl Schalen jeweils in Abstandsrichtung außerhalb der Schalenfolge ein Elastomerkörperteilabschnitt vorgesehen, wobei die Elastomerkörperteilabschnitte gemeinsam eine auf dem Außenumfang des Elastomerkörpers liegende und in Bezug auf die Leitungsrichtung durchgehende Dichtfläche bilden. Dabei wird ein Elastomerkörperteilabschnitt vorzugsweise in demselben Formwerkzeug in einem Schritt mit der Schalenfolge hergestellt. Es stellt dann also dasselbe Elastomerkörperteil sowohl eine Dichtfläche zu der Leitung hin als auch eine Außendichtfläche zur Verfügung.

Etwa im Falle der zuvor genannten Ausführungsform mit einem durch eine Trennfläche zweigeteilten Elastomerkörper wird die Außendichtfläche dann sowohl in Umlaufrichtung als auch in Leitungsrichtung jeweils durch zwei Elastomerkörperteile gebildet, also insgesamt durch vier Elastomerkörperteile.

Dabei ist vorzugsweise an einem der Elastomerkörperteilabschnitte ein in Leitungsrichtung hervortretender, parallel zu den Schalen ausgebildeter Vorsprung vorgesehen, der in einen Zwischenraum zwischen dem anderen Elastomerkörperabschnitt und einstückig mit diesem ausgebildeten Schalen greift und diesen vorzugsweise auch vollständig ausfüllt. Die Weite des Zwischenraums kann dabei jener der übrigen, jeweils mit mehreren Schalen gefüllten, Zwischenräume entsprechen, sodass die Dicke des Vorsprungs vorzugsweise auch einem Vielfachen der Schalendicke entspricht. Die Elastomerkörperteilabschnitte sind dann nach einem Ineinanderschieben in Leitungsrichtung durch diese Steckverbindung verbunden.

In weiterer Ausgestaltung sind die Elastomerkörperteilabschnitte dann ferner durch einen quer (nicht notwendigerweise senkrecht) zur Leitungsrichtung hervortretenden Vorsprung an einem der beiden und eine dazu komplementäre Ausnehmung in dem anderen der beiden miteinander verrastet, also gegen ein unerwünschtes Auseinanderrutschen in Leitungsrichtung gesichert.

Sowohl der zuvor genannte sich in Leitungsrichtung erstreckende als auch der sich quer dazu erstreckende Vorsprung bzw. auch die Ausnehmung können etwa durch einen komplementären Hohlraum bzw. eine komplementäre Form in einem Formwerkzeug wiederum direkt an das entsprechende Elastomerkörperteil angeformt werden, sodass die Herstellung vorteilhafterweise keinen zusätzlichen Fertigungsschritt erfordert.

Dies gilt auch für eine weitere Ausführungsform, die durch eine Trennfläche geteilte Elastomerkörper betrifft und auch unabhängig von den Merkmalen des Hauptanspruchs eine Erfindung darstellt und in dieser Form offenbart sein soll. Dabei sind durch eine Trennfläche voneinander getrennte Elastomerkörperhälften durch eine Steckverbindung zwischen den beiden Elastomerkörperhälften miteinander verbindbar.

Eine erfindungsgemäße Steckverbindung zwischen den Elastomerkörperhälften kann also beispielsweise mit einem Vorsprung an der einen und einer diesen aufnehmenden Vertiefung in der anderen Elastomerkörperhälfte, vorzugsweise einer zu dem Vorsprung komplementären Vertiefung, realisiert werden, wobei auch ohne eine Hinterschneidung von Vorsprung und Ausnehmung bereits die Verschiebbarkeit der Hälften zueinander in Leitungsrichtung blockiert wird. Weiter bevorzugt können der Vorsprung und die Vertiefung jeweils mit schrägen Flanken (beispielsweise bezogen auf die Trennfläche oder den Verlauf der Flanken zueinander) gefasst sein, sodass dann eine Hinterschneidung die Elastomerkörperhälften auch in Bezug auf die Abstandsrichtung zusammenhält. Es kann also beispielsweise ein zu seinem freien Ende hin divergierender Zapfen bzw. ein Zapfen mit einem entsprechend ausgebildeten freien Ende, etwa einem kugelförmigen Aufsatz, in eine dazu komplementäre Ausnehmung greifen.

Ein Verbindungselement kann dabei so angeordnet sein, dass es dann innerhalb des zusammengebauten Elastomerkörpers liegt, oder auch an einer Stirnseite davon vorgesehen werden. So kann beispielsweise schon ein sich über die Trennfläche hinaus in Abstandsrichtung erstreckender Vorsprung an einer Elastomerkörperhätfte in Bezug auf die Leitungsrichtung einen Anschlag darstellen und, etwa wenn ein Ende des Vorsprungs in Leitungsrichtung in die andere Elastomerkörperhälfte greift, die beiden Hälften auch in Bezug auf die Abstandsrichtung zusammenhalten. Solche Steckverbindungen sind in der gesamten Offenbarung so zu verstehen, dass sie gegebenenfalls unter Aufbringung einer entsprechenden Kraft auch durchaus wieder aufgetrennt werden können.

Ein Monteur kann dann, etwa nach einer Dimensionsanpassung der Durchgangsöffnung, die beiden Hälften so an der Leitung zusammensetzen, dass sie diese gemeinsam umschließen. Die Steckverbindung hält die Hälften dann schon unabhängig von einer gegebenenfalls auch erst später hinzuzufügenden Spanneinrichtung zusammen, und der Elastomerkörper kann bereits als Ganzes in die Wandöffnung bzw. einen Rahmen geführt werden, sodass weniger Einzelteile zu handhaben sind. Wenngleich dies auch schon im Falle einer einzigen abzudichtenden Leitung die Handhabung vereinfachen kann, ist das Zusammenstecken und damit auch schon der jeweiligen Leitung einen Elastomerkörper Zuordnen im Falle mehrerer Leitungen doch besonders vorteilhaft; die Elastomerkörperhälften können dann nämlich nicht mehr untereinander verwechselt werden. Ferner sind bereits zusammengesteckte Elastomerkörperhälften auch nach dem Einsetzen in einen Rahmen und vor dem Verpressen besser gegen ein Verrutschen bzw. Herausfallen gesichert.

Die Verbindungselemente können, wie auch eingangs schon erwähnt, vorzugsweise in einem formgebenden Verfahren direkt an die Elastomerkörperteile angeformt sein, sind dann also besonders einfach herstellbar.

Dies gilt auch allgemein für die übrigen Ausführungsformen, weswegen es sich bei den Elastomerkörperteilen vorzugsweise um Spritzgussteile, Pressteile oder Transferpressteile handelt. Zur Herstellung wird also fließfähiges Kunststoffmaterial einer Kavität zugeführt oder plastisch verformbares Material mit einer Form gepresst oder ein Kunststoffmaterial in eine Form geschäumt, extrudiert oder geblasen.

Ein so hergestelltes Elastomerkörperteil hat vorzugsweise Schalen mit einer Stärke von in dieser Reihenfolge zunehmend bevorzugt weniger als 1, (0,5), (0,25) mm und zwischen diesen einen Zwischenraum mit einer Weite in Abstandsrichtung von in dieser Reihenfolge zunehmend bevorzugt mindestens (0.5), 1, 2 mm.

Eine weitere bevorzugte Ausgestaltung betrifft ebenfalls das Zusammenhalten von durch eine..Trennfläche getrennten Elastomerkörperhälften, insbesondere die Anordnung einer zwei Schalen einer ersten Schicht in Umlaufrichtung voneinander trennenden Grenzfläche in Bezug auf die in der Trennfläche nächstfolgende Grenzfläche einer in Abstandsrichtung innenliegend nächsbenachbarten zweiten Schicht. So sind diese beiden Grenzflächen in Umlaufrichtung gegeneinander versetzt, sodass eine der mindestens zwei durch die Grenzfläche voneinander getrennten Schalen der ersten Schicht mit ihrer Innenmantelfläche an den Außenmantelflächen von mindestens zwei Schalen der zweiten Schicht anliegt (und eine der mindestens zwei durch die Grenzfläche voneinander getrennten Schalen der zweiten Schicht mit ihrer Außenmantelfläche an den Innenmantelflächen von mindestens zwei Schalen der ersten Schicht). Die Schalen liegen also jeweils nicht nur an der Mantelfläche einer nächstbenachbarten Schale der eigenen Elastomerkörperhälfte an, sondern bereichsweise auch an der Mantelfläche einer Schale der anderen Elastomerkörperhälfte. Durch die so ineinander verzahnten Schalen werden die beiden Elastomerkörperhälften in Bezug auf die Abstandsrichtung zusammengehalten; das gilt u. U. auch senkrecht zur Trennfläche, etwa wenn zwischen den Mantelflächen eine Haftreibung vorliegt.

Die in der Trennfläche nächst aufeinander folgenden Grenzflächen der nächstbenachbarten Schichten sind in Umlaufrichtung zueinander um vorzugsweise mindestens ein 0,25-faches, weiter bevorzugt ein mindestens (0,5-), 1- bzw. 2-faches ihrer Dicke versetzt.

Die Erfindung betrifft auch einen Satz mit einer Mehrzahl erfindungsgemäf3en Leitungsdurchführungen, die untereinander verschieden sind, jedoch jeweils einen Elastomerkörper aufweisen, der zu je einem Elastomerkörper der anderen Leitungsdurchführungen in dem Satz identisch ist. Ebenso ist auch Satz mit einer Mehrzahl erfindungsgemäßen Elastomerkörpern denkbar, die untereinander verschieden sind, jedoch jeweils ein Elastomerkörperteil aufweisen, das zu je einem Elastomerkörperteil der anderen Elastomerkörper in dem Satz identisch ist.

Die Erfindung bezieht sich auch auf ein Verfahren zur Herstellung eines Elastomerkörpers und/oder einer Leitungsdurchführung zum Aufbauen eines dichtenden Verschlusses einer von einer Leitung durchsetzten Öffnung in einer Wand. Der Elastomerkörper, der im zusammengebauten Zustand wiederum eine Folge mehrerer benachbarter Schalen ergibt, kann dann mit einer Spannvorrichtung gespannt und so auf die Leitung gepresst werden. Die Herstellung erfolgt mit den Schritten:
- Vorsehen eines für sich einstückigen Elastomerkörperteils mit einer Mehrzahl In Abstandsrichtung aufeinander folgenden Schalen, wobei zwischen zwei nächst benachbarten Schalen ein Zwischenraum vorliegt. Dabei entspricht die Weite dieses Zwischenraums in besagter Abstandsrichtung ihrem Betrag nach mindestens einer Summe über die Dicken, ebenfalls in Abstandsrichtung gemessen, von mindestens zwei weiteren Schalen.
- Einfügen von mindestens zwei weiteren an mindestens einem weiteren Elastomerkörperteil vorgesehenen Schalen in den Zwischenraum, sodass der zusammengesetzte Elastomerkörper besagte Folge mehrerer in Abstandsrichtung benachbarter Schalen aufweist.

Die Erfindung betrifft auch die Verwendung einer entsprechenden Leitungsdurchführung zum Abdichten einer Strom-, Gas-, Wasser-, Wärme-, Telekommunikations-, Signal- oder anderweitigen Datenleitung in einer Gebäudewand, Schiffswand oder Gehäusewand.

Im Folgenden wird die Erfindung anhand eines Ausführungsbeispiels näher erläutert, wobei die einzelnen Merkmale auch in anderen Kombinationen erfindungswesentlich sein können und sich implizit auf alle Kategorien der Erfindung beziehen.
- Figur 1: zeigt in Schrägansicht drei dann im zusammengebauten Zustand gemeinsam eine Elastomerkörperhälfte bildende Elastomerkörperteile.
- Figur 2: veranschaulicht die Elastomerkörperteile aus Figur 1 in einer Frontansicht in Leitungsrichtung.
- Figur 3: zeigt in Schrägansicht einen Schnitt durch eine aus den drei Elastomerkörperteilen gemäß den Figuren 1 und 2 zusammengesetzte Elastomerkörperhälfte.
- Figur 4: zeigt die aus den Elastomerkörperteilen gemäß den Figuren 1 und 2 zusammengesetzte Elastomerkörperhälfte in einer Frontansicht in Leitungsrichtung.
- Figur 5: zeigt die aus dem Elastomerkörperteilen aus den Figuren 1 und 2 zusammengesetzte Elastomerkörperhälfte in einer Aufsicht senkrecht zur Leitungsrichtung.
- Figur 6: zeigt eine aus vier Elastomerkörperteilen zusammengesetzte Elastomerkörperhälfte in Schrägansicht.
- Die Figuren 7 bis 10: zeigen jeweils In Schrägansicht die vier Elastomerkörperteile der Elastomerkörperhälfte aus Figur 6.
- Figur 11: veranschaulicht eine über Steckverbindungen mit anderen Elastomerkörperhälften verbindbare Elastomerkörperhälfte.
- Figur 12: zeigt eine Elastomerkörperhälfte, bei welcher die Grenzflächen der Schichten in Umlaufrichtung zueinander versetzt sind.
- Figur 13: illustriert einen aus zwei Elastomerkörperhälften gemäß Figur 12 zusammengesetzten Elastomerkörper.

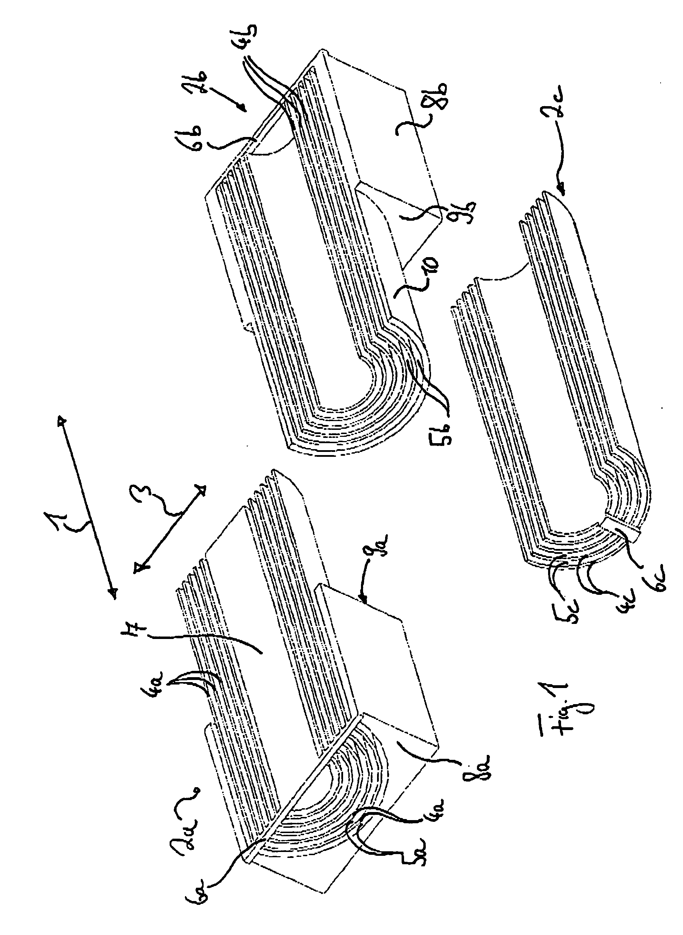

Die in Figur 1 in einer Blickrichtung quer zur Leitungsrichtung 1 gezeigten Elastomerkörpertelle 2a, b, c weisen jeweils eine Mehrzahl in Abstandsrichtung 3 nächstbenachbarter Schalen 4a, b, c auf und sind für sich jeweils einstückig in einem Spritzgussprozess hergestellt. Ein Zwischenraum 5a, b, c zwischen den Schalen 4a, b, c hat dabei in Abstandsrichtung 3 eine solche Weite, dass zwei Schalen, die zu jeweils anderen Elastomerkörperteilen 2a, b, c gehören, darin angeordnet werden können. Die Schalen 4a, b, c haben bei diesem Ausführungsbeispiel eine einheitliche Dicke, und die Weite der Zwischenräume 5a, b, c entspricht einem ganzzahligen Vielfachen davon, ist nämlich doppelt so groß wie die Schalen 4a, b, c dick sind.

Die Schalen einer jeden Folge werden jeweils von einer auf die Stirnseite der Schalen 4a, b, c aufgesetzten, in demselben Herstellungsschritt einstückig mit diesen ausgebildeten Brücke 6a, b, c zusammengehalten.

In Abstandsrichtung 3 innerhalb der Schalenfolge ist an dem Elastomerkörperteil 2a zusätzlich ein über die Brücke 6a mit dem übrigen Elastomerkörperteil 2a verbundender Blindstopfen 7 vorgesehen, der auch bei einer Blindvorverlegung der Leitungsdurchführung, also ohne hindurchgeführte Leitung, eine Abdichtung der Wandöffnung ermöglicht.

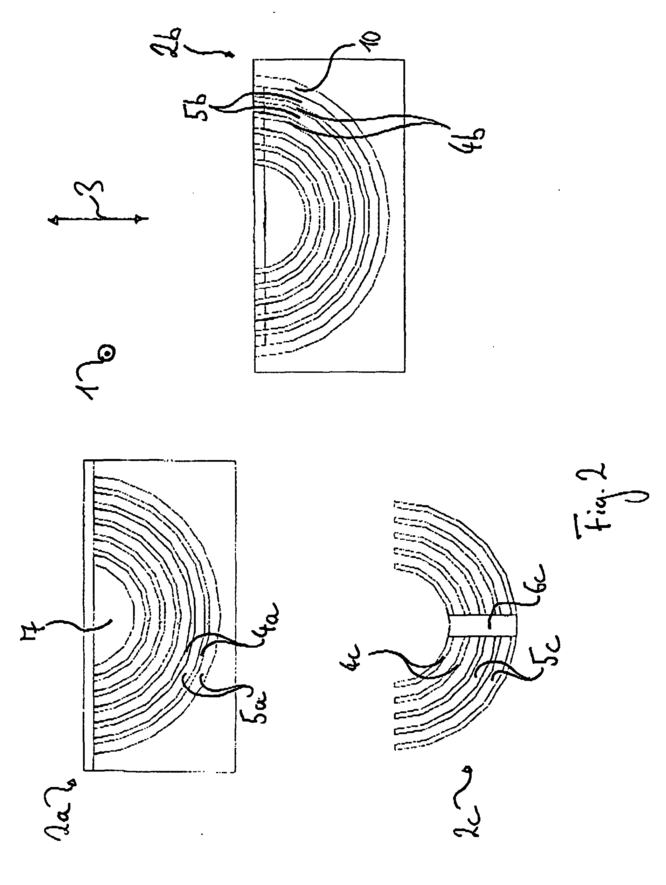

Figur 2 zeigt die Elastomerkörperteile 2a, b, c in einer Frontansicht in Leitungsrichtung, und zwar entlang der Blickrichtung von Figur 1. In dieser Darstellung ist besonders gut zu erkennen, dass die Weite der Zwischenräume 5a, b, c so ausgelegt ist, dass in jedem Zwischenraum 5a, b, c zwei Schalen 4a, b, c jeweils anderer Elastomerkörperteile 2a, b, c angeordnet werden können. Eigentlich bogenförmige Linien sind aus CAD-technischen Gründen vorliegend als Polygonzug wiedergegeben.

Zur Veranschaulichung des Zusammenbaus der Elastomerkörperteile 2a, b, c wird wiederum auf Figur 1 verwiesen. Es werden zunächst die Schalen 4c des Elastomerkörperteils 2c in die Zwischenräume 5a des Elastomerkörperteils 2a eingeführt, und zwar indem die dem Betrachter abgewandte Stirnseite des Elastomerkörperteils 2c an die dem Betrachter zugewandte des Elastomerkörperteils 2a gebracht wird und die Schalen 4c dort eingefädelt werden. Dabei können die Brücken 6a einerseits aufgrund der elastischen Materialeigenschaften zumindest ein Stück weit nach oben gebogen werden und haben andererseits auch die die Zwischenräume 5a allein nicht vollständig ausfüllenden Schalen 4c etwas Spiel, können also jedenfalls an der Brücke 6a vorbeigeführt und In Leitungsrichtung eingeschoben werden, bis die Brücke 6c einen Anschlag an den Stirnseiten der Schalen 4a findet.

Die Schalen 4b des Elastomerkörperteils 2b werden dann an der entgegengesetzten Stirnseite des Elastomerkörpers 2a eingefädelt und in Leitungsrichtung 1 eingeschoben, bis an den Elastomerkörperteilen 2a und 2b jeweils in Abstandsrichtung 3 außerhalb der Schalenfolge angeordnete Elastomerkörperteilabschnitte 8a und 8b mit sich quer zur Leitungsrichtung 1 erstreckenden Flächen 9a, b flächig aneinander anliegen. An dem Elastomerkörperteilabschnitt 8b des Elastomerkörperteils 2b ist dabei ein parallel zu den Schalen 4b verlaufender, sich in Leitungsrichtung 1 bis zu deren Stirnseite erstreckender Vorsprung 10 vorgesehen, dessen Dicke in Abstandsrichtung der doppelten Schalendicke entspricht. Dieser Vorsprung 10 greift dann in den in Abstandsrichtung 3 äußersten Zwischenraum 5a des Elastomerkörperteils 2a, sodass die Elastomerkörperteile 2a, b, c jedenfalls hinsichtlich einer Bewegung in Abstandsrichtung 3 fest miteinander verbunden sind; der den Zwischenraum vollständig ausfüllende Vorsprung 10 stabilisiert so die gesamte Schalenfolge der Elastomerkörperhälfte.

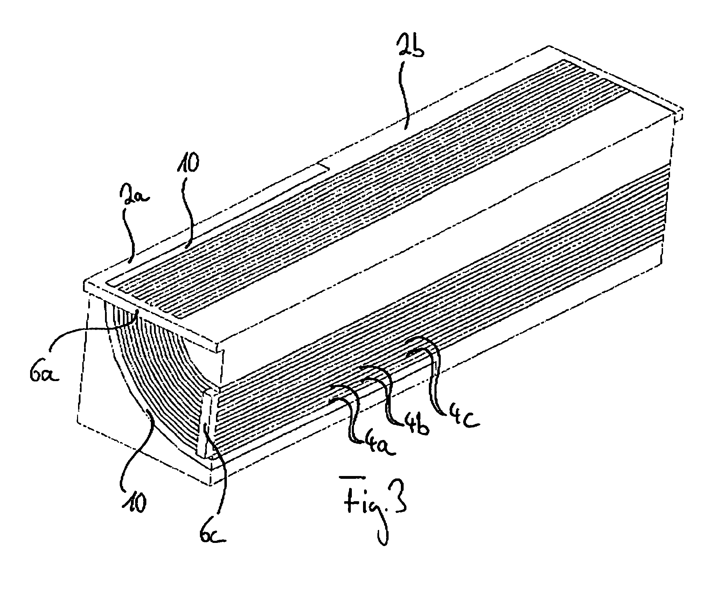

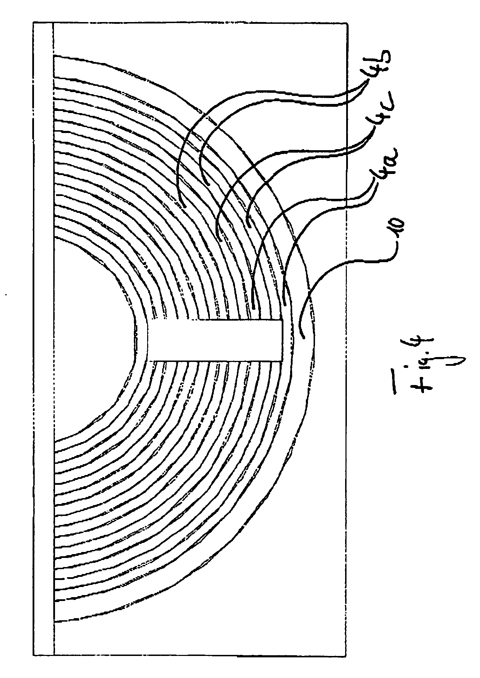

Der den Zwischenraum 5a vollständig ausfüllende Vorsprung 10 ist auch in den Figuren 3 und 4 zu erkennen. Sowohl in der Schnittdarstellung gemäß Figur 4 als auch insbesondere in der Frontansicht in Leitungsrichtung (entgegen der Blickrichtung aus Figur 2) sind dann ferner die erfindungsgemäß zwei je Zwischenraum 5a, b, c vorgesehenen Schalen 4a, b, c jeweils anderer Elastomerkörperteile 2a, b, c zu erkennen.

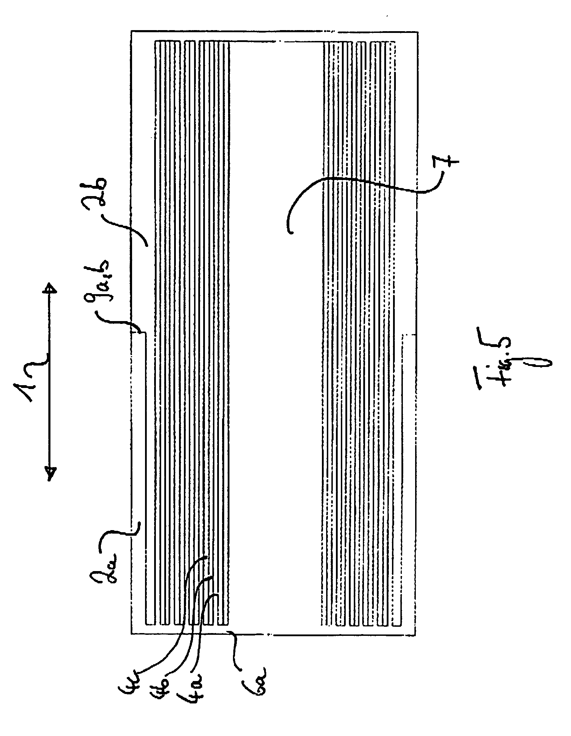

Figur 5 zeigt dann eine Aufsicht senkrecht zur Leitungsrichtung 1, wobei die Zeichenebene mit der die beiden Elastomerkörperhälften voneinander trennenden Trennfläche zusammenfällt. Ein Monteur, der die Durchgangsöffnung des Elastomerkörpers an eine hindurchzuführende Leitung anpassen möchte, kann mit dem Blindstopfen 7 beginnend diesen an einer in der Zeichnung rechten Seite greifen und um die durch die Brücke 6a vorgegebene Schwenkachse nach oben bewegen. Der den Blindstopfen 7 haltende Teil der Brücke 6a kann dabei entweder durch die Drehbewegung "abgedreht" oder auch mit einem Werkzeug durchtrennt werden. Analog dazu wird dann dem Durchmesser der Leitung entsprechend ferner eine bestimmte Zahl Schalen 4a, b, c aus der Elastomerkörperhälfte genommen. Die Elastomerkörperhälfte kann dann zusammen mit einer weiteren entsprechend vorbereiteten Hälfte auf die Leitung gesetzt werden, sodass in einer Schicht jeweils zwei Schalen 4a, b, c die Leitung vollständig umschließen.

Figur 5 veranschaulicht auch einen weiteren Vorteil der erfindungsgemäß jeweils mehrere Schalen 4a, b, c aufnehmenden Zwischenräume 5a, b, c. Der Abschnitt einer Brücke 6a, b, c zwischen zwei in Abstandsrichtung nächst benachbarter Schalen desselben Elastomerkörperteils 2a, b, c ist nämlich länger als die Schalen dick sind, mindestens doppelt so lang. Damit ist auch der einem Schneidewerkzeug beim Abtrennen der Schale 4a, b, c zur Verfügung stehende Brückenabschnitt mindestens doppelt so groß, wodurch insbesondere bei besonders dünnen Schalen einer unbeabsichtigten Abtrennung weiter außen liegender Schalen 4a, b, c vorgebeugt wer den kann.

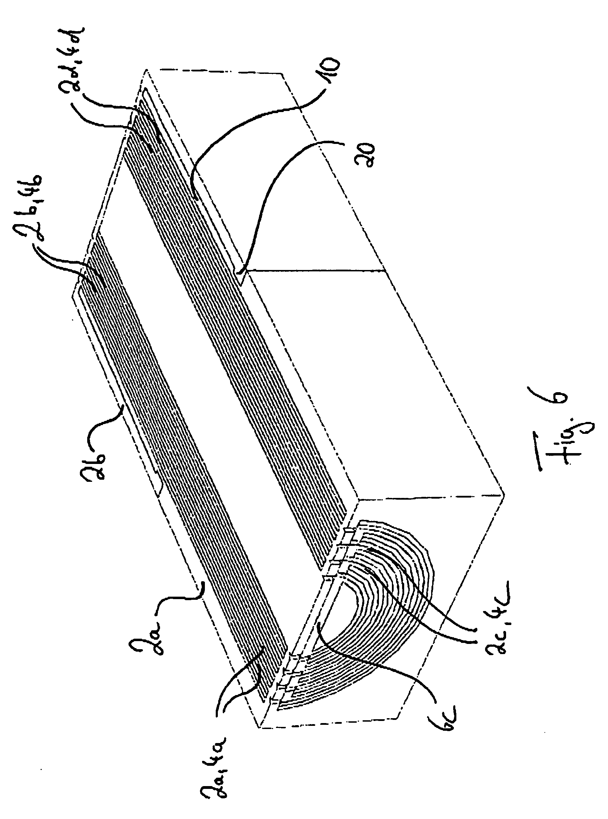

Figur 6 zeigt eine aus vier Elastomerkörperteilen 2a, b, c, d zusammengesetzte Elastomerkörperhälfte, wobei von den Elastomerkörperteilen 2c und 2d nur die Schalen 4c, d bzw. eine Brücke 6c zu sehen sind.

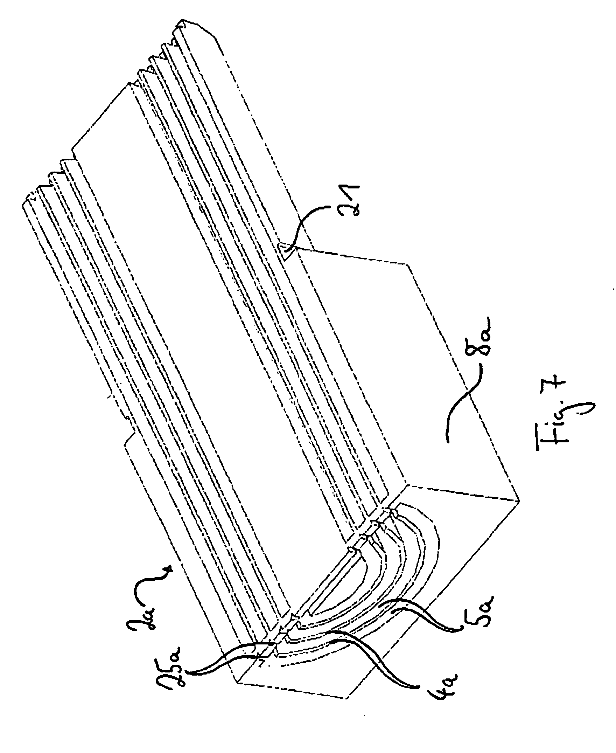

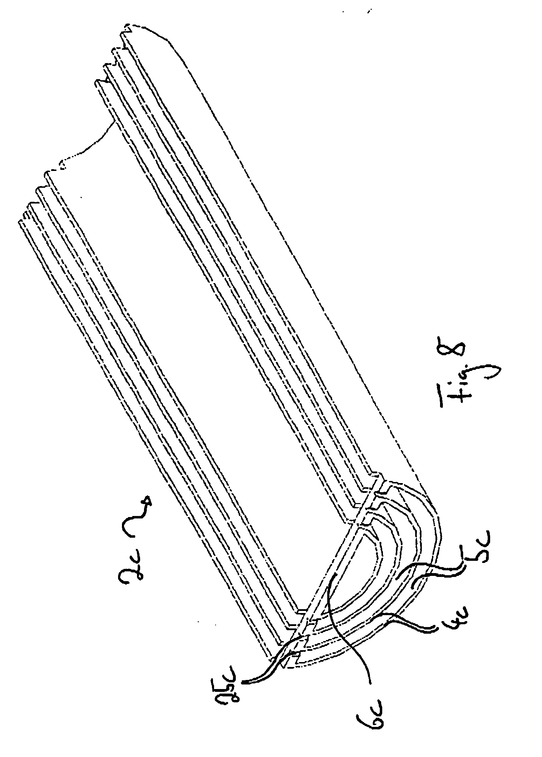

Für den Zusammenbau wird zunächst das Elastomerkörperteil 2c (Figur 8) in Leitungsrichtung 1 in das Elastomerkörperteil 2a (Figur 7) eingeschoben, bis die Brücke 6c des Elastomerkörperteils 2c in einer dazu komplementären Ausnehmung in den Stirnseiten der Schalen 4a des Elastomerkörperteils 2a zum Liegen kommt. Die die Brücke 6c des Elastomerkörperteils 2c aufnehmenden Ausnehmungen in den Stimseiten 4a, b, d sind jeweils an der dem Betrachter zugewandten Stirnseite der Elastomerkörperteile 2a, b, d in den Figuren 7, 9 und 10 zu erkennen. Da die Brücken 6c. d in den dazu komplementären Ausnehmungen in Bezug auf die Leitungsrichtung vollständig aufgenommen werden, sind die Stirnseiten der zusammengebauten Elastomerkörperhälfte dann im Wesentlichen plan.

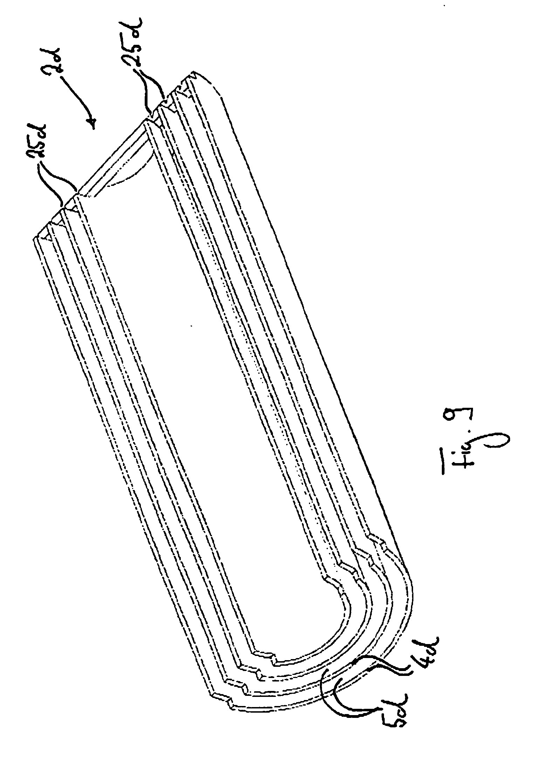

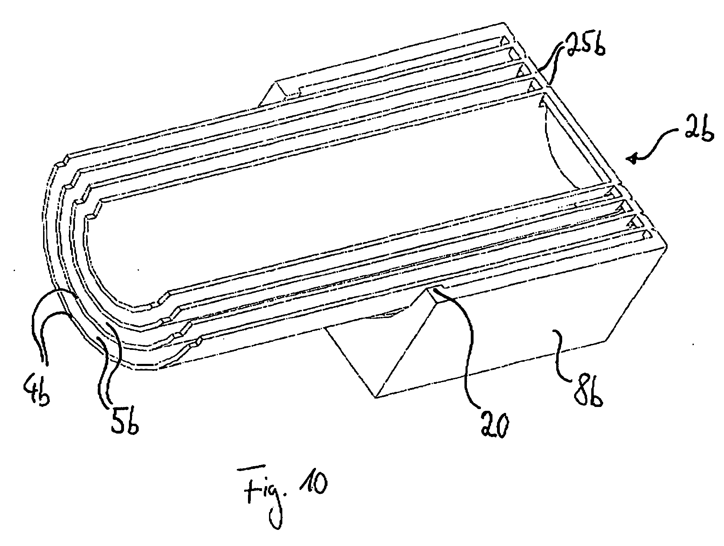

Die Brücken 6a, b, c, d sind bei diesem Ausführungsbeispiel parallel zu der den Elastomerkörper in zwei Hälften teilenden Trennfläche orientiert, sodass die Schalen 4a, b, c jeweils an Ecken (Elastomerkörperteile 2a und 2b, Figuren 7 und 10) bzw. diesen möglichst nahe (Elastomerkörperteile 2c und d, Figuren 8 und 9) gehalten wer den.

An den Brücken 6a, b, c, d sind jeweils mehrere Markierungen 25a, b, c, d zu erkennen, die als Sollbruchstellen für ein Abdrehen oder Abreißen oder auch als Ansatzpunkte für ein Schneidewerkzeug dienen können.

Die Elastomerkörperteile 2b (Figur 10) und 2d (Figur 9) werden analog zusammengesetzt. Die Elastomerkörperteile 2a, c und 2b, d können anschließend in Leitungsrichtung 1 zusammengeschoben werden, bis die Elastomerkörperteilabschnitte 8a, b aneinander eine Anlage finden. An dem Elastomerkörperteilabschnitt 8b ist zusätzlich ein nach innen gerichteter umlaufender Vorsprung 20 vorgesehen (Figur 10), der dann in eine dazu komplementäre Ausnehmung 21 in dem Elastomerkörperteil 2a (Figur 7) greift, sodass die Elastomerkörperteile 2a, b, c, d gegen ein Verrutschen relativ zueinander in Leitungsrichtung gesichert sind Analog zu dem Ausführungsbeispiel gemäß den Figuren 1 bis 5 stabilisiert ein in Leitungsrichtung 1 hervortretender Vorsprung 10 die Elastomerkörperhälfte hinsichtlich der Abstandsrichtung 3.

Die Elastomerkörperteilabschnitte 8a und 8b bilden gleichzeitig eine Außendichtfläche des resultierenden Elastomerkörpers, die in Bezug auf die Leitungsrichtung ausschließlich von diesen beiden Elastomerkörperteilen 2a, b und in Umlaufrichtung dann gemeinsam mit zwei weiteren Elastomerkörperteilen der zweiten Elastomerkörperhälfte gebildet wird.

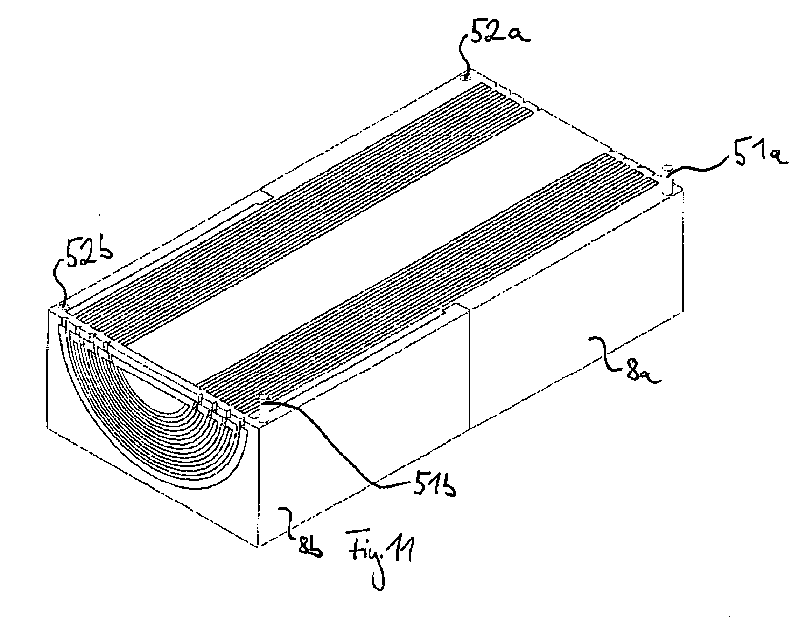

Figur 11 zeigt eine Elastomerkörperhälfte gemäß Figur 6, bei welcher an dem Elastomerkörperteilabschnitt 8a, b in eine (nicht gezeigte) komplementäre Elastomerkörperhälfte hineinragende Vorsprünge 51a, b vorgesehen sind. In einem zusammengesetzten Elastomerkörper greifen diese dann in dazu komplementäre Vertiefungen 52a, b der anderen Elastomerkörperhälfte und halten die beiden Elastomerkörperhälften so zusammen.

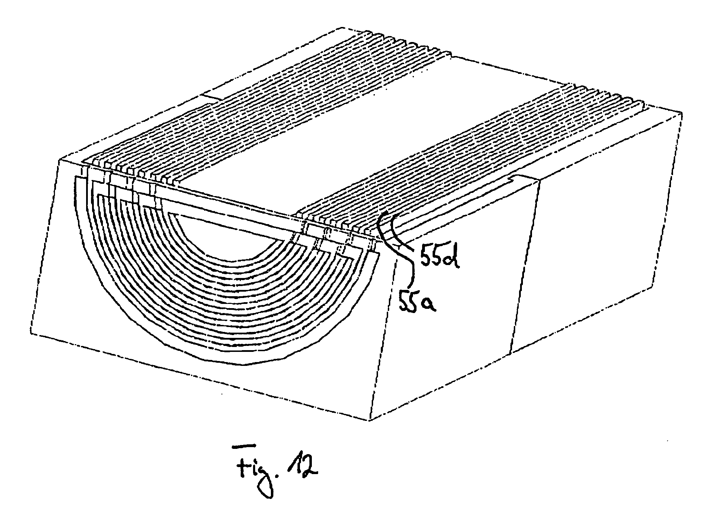

Figur 12 zeigt eine analog zu Figur 6 zusammengesetzte Elastomerkörperhälfte, wobei die Schalen 4a, b, c, d einer Schicht in Umlaufrichtung voneinander trennende Grenzflächen 55a, d jeweils gegenüber den in der Trennfläche nächst folgenden Grenzflächen 55b, c in Umlaufrichtung um zwei Schalendicken versetzt sind. Die Grenzflächen 55a, b, c, d der zweiten (nicht gezeigten) Elastomerkörperhälfte sind hierzu komplementär versetzt, sodass die Schalen 4a, b, c, d des zusammengesetzten Elastomerkörpers im Bereich der Trennfläche dann miteinander verzahnt sind. Hierdurch werden einerseits die beiden Elastomerkörperhälften zusammengehalten; andererseits werden durch die Versetzung in Umlaufrichtung auch mögliche Kriechpfade verlängert. Letztlich kann ein Elastomerkörperteil 2b, c mit ausschließlich entsprechend zurückversetzten Grenzflächen 55b, c, also "kürzeren" Schalen, beim Zusammensetzen der Elastomerkörperhälfte auch leichter an der Materialbrücke 6a, d eines anderen Elastomerkörperteils 2a, d vorbei geschoben werden.

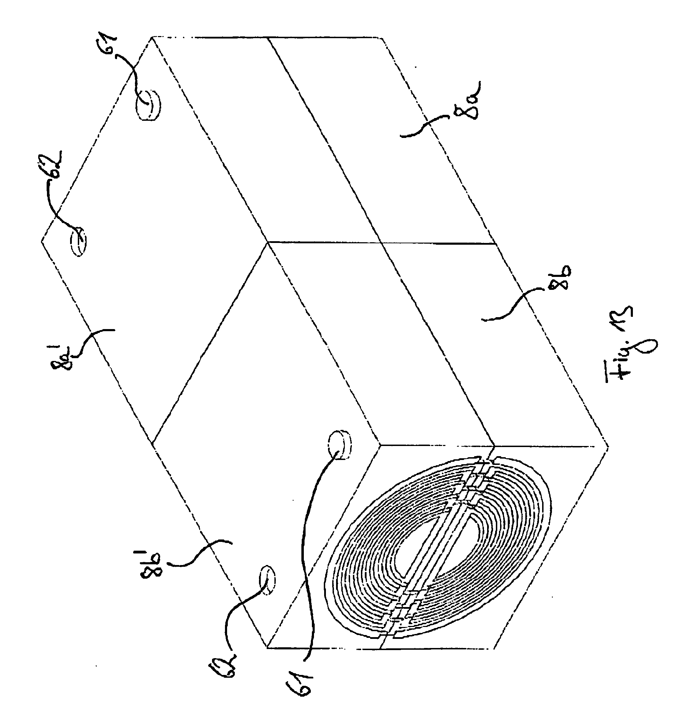

Figur 13 zeigt einen aus zwei Elastomerkörperhälften gemäß Figur 12 zusammengesetzten Elastomerkörper. An den Elastomerkörperteilabschnitten sind außenseitig Vorsprünge 61 und Vertiefungen 62 vorgesehen, über die der Elastomerkörper mit einem weiteren baugleichen Elastomerkörper zu einem Elastomerkörpersatz zusammengesteckt werden kann.

## Patentansprüche

1. Leitungsdurchführung zum Aufbauen eines dichtenden Verschlusses einer von einer Leitung durchsetzten Öffnung in einer Wand, mit einem Elastomerkörper zur dichten Anlage an der Leitung aus einer Mehrzahl für sich einstückigen Elastomerkörperteilen (2a, b, c, d),
wobei der Elastomerkörper mit einer Spannvorrichtung spannbar und dadurch dicht auf die Leitung anpressbar ist,
die Elastomerkörperteile (2a, b, c, d) dazu ausgelegt sind, im zusammengebauten Zustand eine Folge mehrerer hinsichtlich einer den Abstand zur Mittenachse der Leitung bestimmenden Richtung (3) benachbarter Schalen (4a, b, c. d) zu ergeben,
im verpressten Zustand des Elastomerkörpers die Leitung in jeder Schicht dieser Folge von den Schalen (4a, b, c, d) vollständig umgeben ist,
an einem Elastomerkörperteil (2a, b, c, d) eine Mehrzahl in Abstandsrichtung (3) aufeinander folgende Schalen (4a, b, c, d) vorgesehen ist
und zwischen zwei in Abstandsrichtung (3) nächst benachbarten Schalen (4a. b, c, d) dieses Elastomerkörperteils (2a, b, c, d) ein Zwischenraum (5a, b, c, d) vorliegt,
in welchem eine Schale (4a, b, c, d) eines anderen als des den Zwischenraum (5a, b, c, d) bildenden Etastomerkörperteils (2a, b, c, d) angeordnet ist,
**dadurch gekennzeichnet, dass**
in besagtem Zwischenraum (5a, b, c, d) eine Mehrzahl in Abstandsrichtung (3) nächst benachbarte Schalen (4a, b, c, d) zumindest eines anderen Elastomer körperteils (2a, b, c, d) angeordnet ist.

2. Leitungsdurchführung nach Anspruch 1, bei der die in dem Zwischenraum (5a, b, c, d) in Abstandsrichtung (3) nächst benachbarten Schalen (4a, b, c, d) jeweils zu anderen Elastomerkörperteilen (2a, b, c, d) gehören.

3. Leitungsdurchführung nach Anspruch 1 oder 2, bei der alle Schalen (4a, b, c, d) in der Schalenfolge jeweils in einer Mehrzahl zu jeweils einem einzigen Elastomerkörperteil (2a, b, c, d) gehört.

4. Leitungsdurchführung nach einem der vorstehenden Ansprüche, bei der in unterschledlichen Zwischenräumen (5a, b, c, d) des Elastomerkörperteils (2a, b, c, d) angeordnete Schalen über eine in Leitungsrichtung (1) endseitig an den Schalen (4a, b, c, d) vorgesehene, sich nur über einen Teil deren Stirnselte erstreckende erste Brücke (6a, b, c, d) zu einem Elastomerkörpertell (2a, b, c, d) verbunden sind.

5. Leitungsdurchführung nach Anspruch 4, bei der zumindest ein Abschnitt der ersten Brücke (6a, b, c, d) in Bezug auf die Stirnseiten der durch sie verbundenen Schalen (4a, b, c, d) in Leitungsrichtung (1) zurückspringend zwischen den Schalen (4a, b, c, d) angeordnet ist und an einer Stirnseite einer Schale (4a, b, c, d) eines anderen Elastomerkörperteils (2a, b, c, d) eine zu dem Abschnitt komplementäre Ausnehmung vorgesehen ist.

6. Leitungsdurchführung nach einem der vorstehenden Ansprüche, bei der in jeder Schicht der Folge jeweils mindestens zwei Schalen (4a, b, c, d) in mindestens zwel Grenzflächen (55a, b, c, d) pro Schicht aneinandergrenzen, wobei jeweils zwei dieser Grenzflächen (55a, b, c, d) einer jeden Schicht gemeinsam mit jeweils zwei Grenzflächen (55a, b, c, d) der anderen Schichten eine die Leitung durchlaufende Trennfläche ergeben, welche die Schichtenfolge vollständig durchteilt.

7. Leitungsdurchführung nach Anspruch 6 und Anspruch 4 oder 5, bei der die erste Brücke (6a, b, c, d) quer zur Leitungsrichtung (1) über die gesamte Breite der durch sie verbundenen Schalen (4a, b, c, d) an die Trennfläche grenzt und so die Schalen (4a, b, c, d) jeweils an einer Ecke hält.

8. Leitungsdurchführung nach Anspruch 7, bei der an einem anderen als dem die erste Brücke (6a, b, c, d) aufweisenden Elastomerkörperteil (2a, b, c, d) eine zweite Brücke (6a, b, c, d) vorgesehen ist, die an die erste Brücke (6a, b, c, d) grenzt.

9. Leitungsdurchführung nach einem der vorstehenden Ansprüche, bei der an mindestens zwei Elastomerkörperteile (2a, b, c, d) jeweils eine Mehrzahl Schalen (4a, b, c, d) aufweisen, an diesen Etastomerkörperteilen (2a, b, c, d) jeweils in Abstandsrichtung (3) außerhalb der Schalenfolge ein Elastomerkörperteilabschnitt (8a, b) vorgesehen ist und die Elastomerkörperteilabschnit. te (8a, b) gemeinsam eine auf dem Außenumfang des Elastomerkörpers angeordnete Dichtfläche bilden.

10. Leitungsdurchführung nach Anspruch 9, bei der an einem der Elastomerkörperteilabschnitte (8a, b) ein in Leitungsrichtung (1) hervortretender, parallel zu den Schalen (4a, b, c, d) ausgebildeter Vorsprung (10) in einem Zwischenraum (5a, b) zwischen dem anderen Elastomerkörperteilabschnitt (8a, b) und der in Abstandsrichtung (3) äußersten der einstückig mit diesem ausgebildeten Schalen (5a, b) angeordnet ist.

11. Leitungsdurchführung nach Anspruch 9 oder 10, bei der die mindestens zwei Elastomerkörperteitabschnitte (8a, b) miteinander verrastet sind.

12. Leltungsdurchführung nach Anspruch 6, auch in Verbindung mit einem weiteren der vorstehenden Ansprüche, bei der durch die Trennfläche voneinander getrennte Elastomerkörperhälften durch eine Steckverbindung zwischen den beiden Elastomerkörperhälften miteinander verbindbar sind.

13. Leitungsdurchführung nach Anspruch 6, auch in Verbindung mit einem weiteren der vorstehenden Ansprüche, bei der mindestens eine der Grenzflächen (55a, b, c, d) einer ersten Schicht gegenüber der in der Trennfläche nächst folgenden Grenzfläche (55a, b, c, d) einer in Abstandsrichtung (3) innenliegenden nächstbenachbarten zweiten Schicht in Umlaufrichtung solchermaßen versetzt ist, dass eine der mindestens zwei Schalen (4a, b, c, d) der besagten ersten Schicht mit ihrer Innenmantelfläche an den Außenmantelflächen von mindestens zwei Schalen (4a, b, c, d) der zweiten Schicht anliegt.

14. Verfahren zur Herstellung eines Elastomerkörpers für eine Leitungsdurchführung zum Aufbauen eines dichtenden Verschlusses einer von einer Leitung durchsetzten Öffnung in einer Wand,
wozu der Elastomerkörper mit einer Spannvorrichtung spannbar und dadurch dicht auf die Leitung anpressbar und femer
dazu ausgelegt ist, im zusammengebauten Zustand eine Folge mehrerer hinsichtlich einer den Abstand zur Mittenachse der Leitung bestimmenden Richtung (3) benachbarter Schalen (4a, b, c, d) zu ergeben.
und im verpressten Zustand des Elastomerkörpers die Leitung In jeder Schicht dieser Folge von den Schalen (4a, b, c, d) vollständig umgeben ist,
mit den Schritten:
- Vorsehen eines für sich einstückigen Elastomerkörperteils (2a, b, c, d) mit einer Mehrzahl in Abstandsrichtung (3) aufeinander folgenden Schalen (4a, b, c, d), wobei zwischen zwei nächst benachbarten Schalen (4a, b, c, d) ein Zwischenraum (5a, b, c, d) vorliegt.
- Einfügen von mindestens zwei an mindestens einem weiteren Elastomerkörperteil (2a, b, c, d) vorgesehenen Schalen (4a, b, c, d) in den Zwischenraum (5a, b, c, d),
sodass der resultierende Elastomerkörper besagte Folge mehrerer hinsichtlich der Abstandsrichtung (3) benachbarter Schalen (4a, b, c, d) aufweist.

15. Verwendung einer Leitungsdurchführung nach einem der Ansprüche 1 bis 13, zum Abdichten einer Strom-, Gas-, Wasser-, Wärme-, Telekommunication-, Signal-, oder Datenleitung in einer Gebäudewand, Schiffswand oder Gehäusewand.

## Claims

1. A line duct for establishing sealing closure of an opening in a wall through which a line passes, comprising an elastomer body for sealing contact on said line made up of a plurality of one-piece elastomer body parts (2a, b, c, d),
it being possible to clamp said elastomer body with a tensioning device and in this way to press it onto said line such as to form a seal,
said elastomer body parts (2a, b, c, d) being designed to produce, in an assembled state, a series of a number of neighbouring shells (4a, b, c, d) in respect of a direction (3) determining a distance from a centre axis of said line,
in a pressed state of said elastomer body said line being completely surrounded by said shells (4a, b, c, d) in each layer of said series,
a plurality of in said distance direction (3) consecutive shells (4a, b, c, d) being provided on at least one of said elastomer body parts (2a, b, c, d)
and there being a space (5a, b, c, d) between two of said shells (4a, b, c, d), next neighbouring in said distance direction (3), of said at least one elastomer body part (2a, b, c, d),
in which a shell (4a, b, c, d) of an elastomer body part (2a, b, c, d) different from said at least one elastomer body part (2a, b, c, d) forming said space (5a, b, c, d) is arranged,
**characterised in that**
in said space (5a, b, c, d) there are arranged a plurality of, in said distance direction (3), next neighbouring shells (4a, b, c, d) of at least one other of said elastomer body parts (2a, b, c, d).

2. The line duct according to Claim 1, in which those of said shells (4a, b, c, d) that are next neighbouring to one another in said distance direction (3) in said space (5a, b, c, d) respectively belong to others of said elastomer body parts (2a, b, c, d).

3. The line duct according to Claim 1 or 2, in which all of said shells (4a, b, c, d) in said series of said shells respectively belong, in a plurality, to a single one of said elastomer body parts (2a, b, c, d) respectively.

4. The line duct according to any of the preceding claims, in which shells arranged in different spaces (5a, b, c, d) of said elastomer body part (2a, b, c, d) are connected to at least one of said elastomer body parts (2a, b, c, d) by a first bridge (6a, b, c, d) provided on an end of said shells (4a, b, c, d) in said direction of said line (1) and extending over just part of a face side of the latter.

5. The line duct according to Claim 4, in which at least one section of said first bridge (6a, b, c, d) is arranged between said shells (4a, b, c, d) jumping back in said direction of said line (1) in relation to said face sides of said shells (4a, b, c, d) connected by it, and on one face side of at least one of said shells (4a, b, c, d) of another one of said elastomer body parts (2a, b, c, d) a recess complementary to said section is provided.

6. The line duct according to any of the preceding claims, in which in every layer of said series at least two of said shells (4a, b, c, d) respectively are adjacent to one another in at least two boundary surfaces (55a, b, c, d) per layer, two of said boundary surfaces (55a, b, c, d) respectively of each of said layers producing together with two of said boundary surfaces (55a, b, c, d) respectively of the other ones of said layers a separating surface running through said line which totally divides said series of said layers.

7. The line duct according to Claim 6 and Claim 4 or 5, in which said first bridge (6a, b, c, d) borders said separating surface transversely to said direction of said line (1) over a whole width of those of said shells (4a, b, c, d) connected by it, and so respectively holds said shells (4a, b, c, d) at a corner.

8. The line duct according to Claim 7, in which there is provided on at least one of said elastomer body parts (2a, b, c, d) other than the one having said first bridge (6a, b, c, d) a second bridge (6a, b, c, d) which is adjacent to said first bridge (6a, b, c, d).

9. The line duct according to any of the preceding claims, in which at least two of said elastomer body parts (2a, b, c, d) respectively have a plurality of said shells (4a, b, c, d), there is provided on said at least two elastomer body parts (2a, b, c, d), respectively in said distance direction (3) outside of said series of shells, an elastomer body part section (8a, b), and said elastomer body part sections (8a, b) together form a sealing surface arranged on an outer circumference of said elastomer body.

10. The line duct according to Claim 9, in which on one of said elastomer body part sections (8a, b) a projection (10) formed parallel to said shells (4a, b, c, d) and protruding in said direction of said line (1) is arranged in a space (5a, b) between the other one of said elastomer body part sections (8a, b) and an outermost one, in said distance direction (3), of said shells (5a, b) formed integrally with the latter.

11. The line duct according to Claim 9 or 10, in which said at least two elastomer body part sections (8a, b) are clicked together.

12. The line duct according to Claim 6, also in combination with a further of the preceding claims, in which elastomer body halves separated from one another by said separating surface can be connected to one another by a plug connection between said two elastomer body halves.

13. The line duct according to Claim 6, also in combination with a further of the preceding claims, in which at least one of said boundary surfaces (55a, b, c, d) of a first one of said layers is offset in a circulating direction in relation to a next following one of said boundary surfaces (55a, b, c, d) in said separating surface, of a second one of said layers next neighbouring and lying on an inside in said distance direction (3) such that one of said at least two shells (4a, b, c, d) of said first layer rests with an inner lateral surface thereof against outer lateral surfaces of at least two of said shells (4a, b, c, d) of said second layer.

14. A process for producing an elastomer body for a line duct for establishing sealing closure of an opening in a wall through which a line passes,
for which purpose said elastomer body can be clamped with a tensioning device and in this way can be pressed onto said line such as to form a seal,
and furthermore is designed to produce, in an assembled state, a series of a number of shells (4a, b, c, d) neighbouring to one another in respect of a direction (3) determining a distance from a centre axis of said line,
and in a pressed state of said elastomer body said line in each layer of this series is completely surrounded by said shells (4a, b, c, d),
comprising the steps:
- providing a one-piece elastomer body part (2a, b, c, d) with a plurality of said shells (4a, b, c, d) following one another in said distance direction (3), there being a space (5a, b, c, d) between two next neighbouring, ones of said shells (4a, b, c, d),
- adding at least two of said shells (4a, b, c, d) provided on at least one further elastomer body part (2a, b, c, d) into said space (5a, b, c, d),
so that said elastomer body resulting has said series of a number of shells (4a, b, c, d) neighbouring to one another in respect of said distance direction (3).

15. A use of the line duct according to any of Claims 1 to 13 for sealing a power, gas, water, heat, telecommunications, signal or data line in a building wall, ship wall or housing wall.

## Revendications

1. Passage de conduite pour la construction d'un dispositif de fermeture étanche d'une ouverture traversée par une conduite dans une paroi, comprenant un corps élastomère destiné à s'appuyer intimement contre la conduite composé d'une pluralité de parties de corps élastomère monoblocs respectives (2a, b, c, d),
le corps élastomère pouvant être serré par un dispositif de serrage et ainsi être pressé de manière intime contre la conduite,
dans lequel les parties de corps élastomère (2a, b, c, d) sont conçues pour produire, dans l'état assemblé, une série de plusieurs enveloppes (4a, b, c, d) voisines en ce qui concerne une direction (3) définissant l'espacement par rapport à l'axe médian de la conduite,
à l'état comprimé du corps élastomère, la conduite est complètement englobée, dans chaque couche de cette série, par les enveloppes (4a, b, c, d),
il est prévu, au niveau d'une partie de corps élastomère (2a, b, c, d), une pluralité d'enveloppes (4a, b, c, d) qui se succèdent dans la direction d'espacement (3)
et il se trouve un espace intermédiaire (5a, b, c, d) entre deux enveloppes (4a, b, c, d) directement voisines de cette partie de corps élastomère (2a, b, c, d) dans la direction d'espacement (3),
dans lequel il est agencé une enveloppe (4a, b, c, d) d'une autre partie de corps élastomère (2a, b, c, d) que celle formant l'espace intermédiaire (5a, b, c, d),
**caractérisé en ce que**
il est agencé dans ledit espace intermédiaire (5a, b, c, d) une pluralité d'enveloppes (4a, b, c, d) directement voisines dans la direction d'espacement (3) d'au moins une autre partie de corps élastomère (2a, b, c, d).

2. Passage de conduite selon la revendication 1, dans lequel les enveloppes directement voisines (4a, b, c, d) dans l'espace intermédiaire (5a, b, c, d) dans la direction d'espacement (3) appartiennent respectivement à d'autres parties de corps élastomère (2a, b, c, d).

3. Passage de conduite selon la revendication 1 ou 2, dans lequel toutes les enveloppes (4a, b, c, d) de la série d'enveloppes, respectivement dans une pluralité, appartiennent respectivement à une seule partie de corps élastomère (2a, b, c, d).

4. Passage de conduite selon l'une des revendications précédentes, dans lequel les enveloppes agencées dans divers espaces intermédiaires (5a, b, c, d) de la partie de corps élastomère (2a, b, c, d) sont reliées à une partie de corps élastomère (2a, b, c, d) par le biais d'un premier pont (6a, b, c, d) prévu dans la direction de la conduite (1) sur le côté terminal des enveloppes (4a, b, c, d) en s'étendant sur une partie seulement de leur face frontale.

5. Passage de conduite selon la revendication 4, dans lequel au moins une section du premier pont (6a, b, c, d) est agencée entre les enveloppes (4a, b, c, d) avec un certain retrait dans la direction de la conduite (1) par rapport aux faces frontales des enveloppes (4a, b, c, d) qu'il relie et il est prévu un évidement complémentaire à cette section sur une face frontale d'une enveloppe (4a, b, c, d) d'une autre partie de corps élastomère (2a, b, c, d).

6. Passage de conduite selon l'une des revendications précédentes, dans lequel, dans chaque couche de la série, au moins deux enveloppes (4a, b, c, d) sont à chaque fois adjacentes dans au moins deux surfaces limites (55a, b, c, d) par couche, en sachant qu'à chaque fois deux de ces surfaces limites (55a, b, c, d) de chaque couche produisent, conjointement avec deux surfaces limites (55a, b, c, d) respectives des autres couches, une surface de séparation traversant la conduite qui divise complètement la série de couches.

7. Passage de conduite selon la revendication 6 et la revendication 4 ou 5, dans lequel le premier pont (6a, b, c, d) borde la surface de séparation transversalement à la direction de la conduite (1) sur toute la largeur des enveloppes (4a, b, c, d) qu'il relie et maintient ainsi les enveloppes (4a, b, c, d) à chaque fois au niveau d'un coin.

8. Passage de conduite selon la revendication 7, dans lequel il est prévu, au niveau d'une autre partie de corps élastomère (2a, b, c, d) que celle présentant le premier pont (6a, b, c, d), un deuxième pont (6a, b, c, d) bordant le premier pont (6a, b, c, d).

9. Passage de conduite selon l'une des revendications précédentes, dans lequel au moins deux parties de corps élastomère (2a, b, c, d) présentent à chaque fois une pluralité d'enveloppes (4a, b, c, d), et il est prévu une section de partie de corps élastomère (8a, b) respective au niveau de ces parties de corps élastomère (2a, b, c, d) dans la direction d'espacement (3) hors de la série d'enveloppes et les sections de partie de corps élastomère (8a, b) forment conjointement une surface de contact disposée sur le pourtour extérieur du corps élastomère.

10. Passage de conduite selon la revendication 9, dans lequel il est prévu, au niveau d'une des sections de partie de corps élastomère (8a, b), une saillie (10) ressortant dans la direction de la conduite (1) de manière parallèle aux enveloppes (4a, b, c, d) dans un espace intermédiaire (5a, b) entre l'autre section de partie de corps élastomère (8a, b) et une enveloppe la plus extérieure, dans la direction d'espacement (3), des enveloppes (5a, b) formées d'un seul tenant avec cette dernière.

11. Passage de conduite selon la revendication 9 ou 10, dans lequel les au moins deux sections de partie de corps élastomère (8a, b) sont enclenchées l'une dans l'autre.

12. Passage de conduite selon la revendication 6, également en combinaison avec une autre des revendications précédentes, dans lequel les moitiés de corps élastomère séparées l'une de l'autre par la surface de séparation peuvent être reliées l'une à l'autre par un raccordement à emboîtement entre les deux moitiés de corps élastomère.

13. Passage de conduite selon la revendication 6, également en combinaison avec une autre des revendications précédentes, dans lequel au moins une des surfaces limites (55a, b, c, d) d'une première couche est décalée dans la direction de rotation par rapport à la surface limite (55a, b, c, d), faisant immédiatement suite dans la surface de séparation, d'une deuxième couche immédiatement voisine et située sur l'intérieur dans la direction d'espacement (3), de telle manière qu'une des au moins deux enveloppes (4a, b, c, d) de ladite première couche repose, par sa surface de couverture intérieure, sur les surfaces de couverture extérieures d'au moins deux enveloppes (4a, b, c, d) de la deuxième couche.

14. Procédé de production d'un corps élastomère pour un passage de conduite pour la construction d'un dispositif de fermeture étanche d'une ouverture traversée par une conduite dans une paroi,
pour lequel le corps élastomère peut être serré par un dispositif de serrage et ainsi être pressé de manière intime contre la conduite et, en outre
est conçu pour produire, dans l'état assemblé, une série de plusieurs enveloppes (4a, b, c, d) voisines en ce qui concerne une direction (3) définissant l'espacement par rapport à l'axe médian de la conduite,
à l'état comprimé du corps élastomère, la conduite est complètement englobée, dans chaque couche de cette série, par les enveloppes (4a, b, c, d), comportant les étapes consistant à :
- prévoir une partie de corps élastomère monobloc respective (2a, b, c, d) comportant une pluralité d'enveloppes (4a, b, c, d) qui se succèdent dans la direction d'espacement (3), un espace intermédiaire (5a, b, c, d) se trouvant entre deux enveloppes directement voisines (4a, b, c, d),
- introduire dans l'espace intermédiaire (5a, b, c, d) au moins deux enveloppes (4a, b, c, d) prévues au niveau d'au moins une autre partie de corps élastomère (2a, b, c, d),
de manière que le corps élastomère résultant présente ladite série de plusieurs enveloppes (4a, b, c, d) voisines en ce qui concerne la direction d'espacement (3).

15. Utilisation d'un passage de conduite selon l'une des revendications 1 à 13, pour étancher une conduite ou ligne servant à la transmission de courant, de gaz, d'eau, de chaleur, de télécommunications, de signaux ou de données dans une paroi de bâtiment, de navire ou d'un boîtier.
